# EUROPEAN PATENT APPLICATION

(11) **EP 3 929 831 A2**
(43) Date of publication of application: **29.12.2021**
(21) Application number: 21176478.2
(22) Date of filing: 28.05.2021
(51) Int. Cl.: G06Q 10/00

(54) **AUTOMATIC DISTRIBUTION METHOD AND SYSTEM**

(30) Priority: 24.06.2020 IT 202000015184
(71) Applicant: Indaco Project S.r.l., 40013 Castel Maggiore (BO) (IT)
(72) Inventor: MARZO, Antonio, 40010 BENTIVOGLIO (Bologna) (IT)
(74) Representative: Puggioli, Tommaso

(57) **Abstract**

Described is an automatic distribution method (100) comprising the following steps:
- preparing (102) at least one product (P) inside said automatic dispenser (3);
- presentation (103) on said portal (4) of the at least one product (P) available inside the automatic dispenser (3);
- receiving (104) an order (O) for purchasing of at least one product (P);
- booking (105) the at least one product (P) purchased with the order (O) in the receiving step (104);
- sending (106) an encrypted code (C) to a recipient representing the purchase order (O) received in the receiving step (104);
- reading (107) said code (C) using the reading apparatus (31);
- analysing (108) said code (C);
- dispensing (110), if the analysing step (107) has given a positive result, of the at least one product (P) included in the order (O) shown in the code (C) analysed in the analysing step (108).

## Description

This invention relates to an automatic distribution method and system.

More specifically, the invention relates to a method and a system for automatic distribution with reading of encrypted codes, preferably QR codes.

Automatic distribution machines are currently known in the distribution sector wherein the user can purchase the products stored inside the automatic dispenser after inserting a predetermined quantity of money or a credit card.

Generally speaking, these automatic dispensers have a display window through which the user can view the actual availability of the products and therefore select the products in question from among those present.

Alternatively, the dispensers have a screen through which the user can consult the availability of the products which can be dispensed and make the relative choice, if necessary through the screen itself, if it also possesses the selector capacity as is known with the touchscreen of the cigarette or coffee dispensers.

The prior art techniques have two main problems.

The first problem is due to the fact that these systems require the physical presence of the user to check for the presence of the product.

If the desired product is not available, the journey to the dispenser is in vain and the user must necessarily go to another dispenser to check again the availability of the product.

The second problem is represented by the lack of privacy safeguarding of the user, who may be observed whilst selecting and picking up the products.

This impossibility of guaranteeing the privacy of his/her purchase might discourage a user from going to an automatic dispenser to make the purchase.

To overcome these drawbacks, users increasingly opt to purchase via electronic trading companies, the so-called e-commerce.

Through e-commerce company portals, the user can check whether or not a product is actually available, purchase it directly by means of digitalised payment techniques and organise the delivery of the product, packaged inside a wrapper, to his/her home or to an authorised collection point.

In this way, the customer sees greater protection of his/her privacy.

However, by using the known e-commerce methods, the user is prevented from immediately taking possession of the product purchased due to delivery times, which could even be quite long due to logistics or transport issues.

In that sense, there is a strongly felt need in the automatic distribution sector of guaranteeing to the user an immediate satisfaction of the need which, at the same time, complies with the privacy requirements.

The main purpose of the invention is to provide an automatic distribution method which guarantees an immediate delivery of the product and which, at the same time, complies with the privacy requirements of the user who needs the product.

Another purpose of the invention is to provide an automatic distribution system which allows a customer or user who uses this system to immediately satisfy the need and at the same time guarantee compliance with the relative privacy requirements.

These aims and others, which are more apparent in the description which follows, are achieved by a method and an automatic distribution comprising the technical features described in one or more of the appended claims.

The technical features of the invention, with reference to the above-mentioned aims, are clearly described in the claims below and its advantages are more apparent from the detailed description which follows, with reference to the accompanying drawings which illustrate a preferred, non-limiting embodiment of the invention by way of example and in which:
- Figure 1 illustrates, by means of a block diagram, an embodiment of the automatic distribution method according to the invention;
- Figure 2 is a schematic view of the distribution system according to an embodiment;
- Figure 3 is a schematic view of the distribution system according to another embodiment.

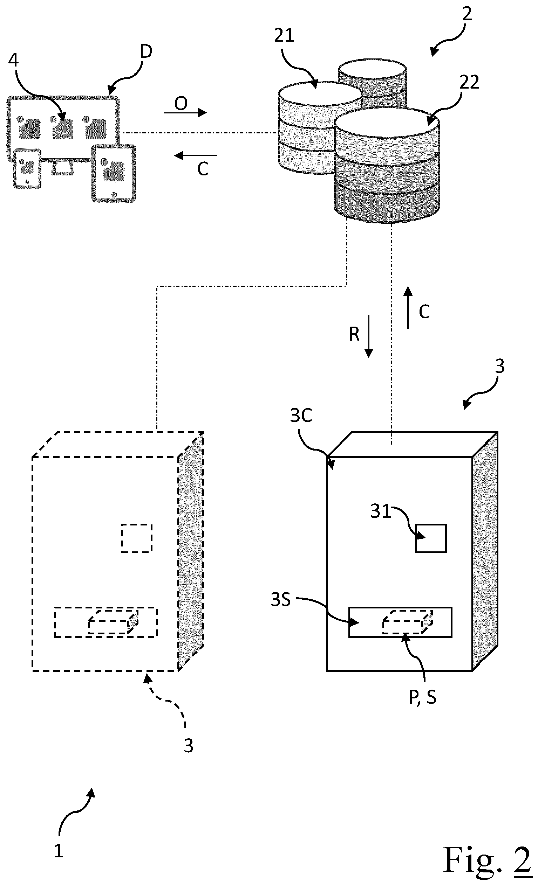

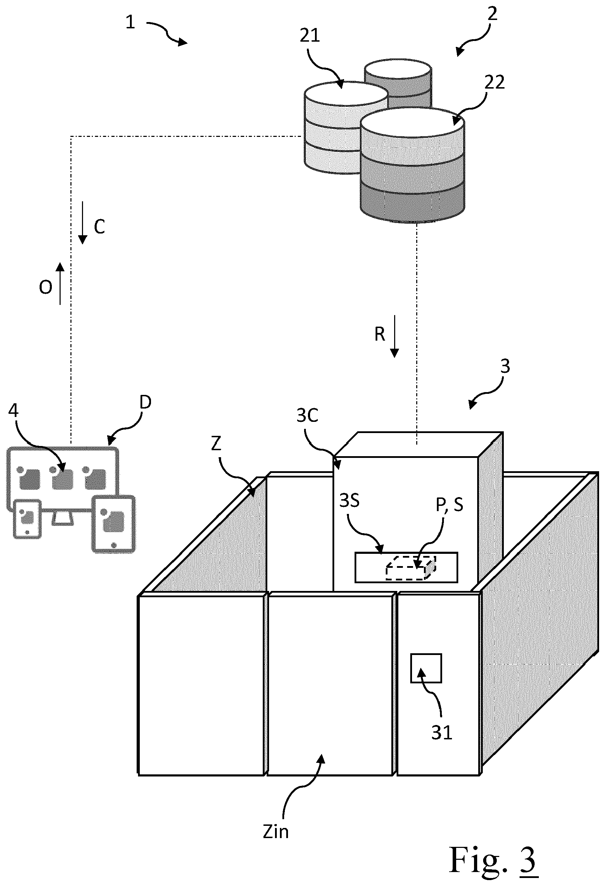

With reference to Figures 2 and 3, the numeral 1 denotes a system 1 for automatically distributing products P, hereinafter referred to for simplicity as system 1.

As illustrated, the system 1 comprises a remote server 2.

In this description, the term "server" means a hardware and/or software component for processing and managing traffic, connected to the Internet, which provides any type of service for other components, generally of the software type and typically defined as "client".

Moreover, again in this description, the term "server" is used to mean a component whose architecture is centralised, that is to say, concentrated in a single hardware, or decentralised, structure, that is to say, distributed on two or more hardware structures.

More specifically, the server 2 comprises a data storage structure 21.

The storage structure 21 is configured for storing data in a temporary or permanent fashion.

In other words, the storage structure 21 is a memory where data is saved for any future uses.

The server 2 also comprises a communication module 22.

The communication module 22 is a data interface which allows the server 2 to receive data from, or transmit data to, other devices connected to it.

The data storage structure 21 and the communication module 22 are operatively connected to each other.

The data received from the communication module 22 can be saved in the storage structure 21 and can then be extracted from said storage structure 21 for a transmission through the communication module 22.

Preferably, the system 1 comprises a main unit, designed for normal operation of the system 1, and a backup unit which, in the event of malfunctions on the main unit, advantageously allows continuity of service to be guaranteed.

The system 1 comprises at least one automatic dispenser 3.

Figure 2 illustrates two dispensers 3 of which one is drawn with a dashed line to indicate that the system 1 may comprise any number of dispensers 3

For simplicity, Figure 3 shows a single dispenser 3.

The automatic dispenser 3 is configured to contain and dispense at least one product P.

The products P designed to be contained inside the automatic dispenser and dispensed by it, in the context of the invention, are of various types, for example depending on where the automatic dispenser 3 is located.

According to an example, the products P are items of clothing.

According to another example, the products P are of the food type, such as, for example, drinks or packaged food products (snacks).

According to yet another example, the products P are pharmaceutical articles.

According to another example, the products P are stationery items, such as pens, pencils, pencil sharpeners.

According to yet another example, products P are toys, such as models, dolls and boxed games.

Due to the different nature and the various types of the products which may be set up in the automatic dispenser 3, reference will be made below to generic products P.

Preferably, said products P are contained in a respective anonymous wrapper S, for example a box, which does not allow the contents of the anonymous wrapper S to be seen from the outside, that is to say, it makes it impossible to distinguish which product P is contained therein.

In that way, the system 1 will dispense a product P inside said anonymous wrapper S which makes it impossible to recognise from the outside of the anonymous wrapper S which product P is contained therein.

Advantageously, the anonymous wrapper S preserves the privacy of a user who picks up one of the products P present inside the automatic dispenser 3.

In fact, thanks to the presence of the anonymous wrapper S, it is impossible for an outside observer to recognise the product P picked up by the user, who therefore has protected the confidentiality of his/her purchases.

In this way, the dispenser 3 can also be used to distribute articles, such as alcoholic drinks or sex toys or contraceptives, which could result in embarrassment for the customer at the time of withdrawal.

Preferably, the server 2, in particular the storage structure 21, contains information relating to the localisation, that is, the address, of the automatic dispenser.

According to an embodiment, the system 1 comprises, as mentioned, a plurality of automatic dispensers 3, each operatively connected to the server 2.

Preferably, the server 2, in particular the storage structure 21, contains information relating to the localisation, that is, the address, of each automatic dispenser of the plurality of automatic dispensers 3 and, for each automatic dispenser, contains information regarding the products present and/or deliverable by said automatic dispenser.

In that way, on the basis of the product and the localisation of the dispensers which have made available, the customer can select one for picking it up.

In the following description reference is made to an embodiment comprising a single automatic dispenser 3 as illustrated in Figure 3. However, the following considerations extend to the embodiments comprising several automatic dispensers 3.

The automatic dispenser 3 comprises an outer case 3C.

Preferably, the outer case 3C is an opaque outer case, that is to say, a case of which the inside cannot be inspected from the outside.

Advantageously, the presence of an opaque outer case 3C makes it impossible to see from the outside of the automatic dispenser 3 the products P contained inside the outer case 3 and hence to understand the nature of a product P dispensed by the automatic dispenser 3.

More specifically, the automatic dispenser 3 comprises a door 3S movable between an open configuration, which makes accessible a zone for picking up the at least one product P dispensed, and a closed configuration, where the pickup zone is made inaccessible.

Advantageously, the automatic dispenser 3 does not have a panel for interaction with the user, for example a pushbutton panel or a touchscreen, so that the selection made by the user who intends to pick up a product P cannot be seen from the outside.

In one embodiment, illustrated in Figure 3, the automatic device 3 comprises a reserved zone Z.

In this embodiment, said reserved zone Z is a room which at least partly surrounds the automatic dispenser 3.

Preferably, said reserved zone is accessible through an entrance Zin, for example a door or a flap.

More specifically, the reserved zone Z is configured to maintain the privacy of a user.

Advantageously, the presence of the reserved zone Z guarantees the privacy of the user during the operations for picking up at least one product P, since access to the reserved zone Z makes these operations invisible to the eyes of external observers.

The automatic dispenser 3 is operatively connected to the communication module 22 of the server 2.

More specifically, the automatic dispenser 3 is configured to send to said communication module 22 of the server 2 a signal representing the products available in the automatic dispenser 3.

This signal is received by the connection module 22 and stored in the storage structure 21 of the server 2.

Moreover, the automatic dispenser 3 is configured to receive from said communication module 22 of the server 2 a signal representing an order O of a product P and, in particular, a booking signal R of said product P.

Depending on said booking signal R, the automatic dispenser 3 is preferably configured to reserve the relative product P, that is to say, make the relative product P unavailable for future purchases.

Preferably, the server 2 is configured to reserve, that is to say, make available for future purchases, the product P relative to the order O.

According to another aspect, the system 1 comprises at least one apparatus 31 for reading an encrypted code C.

More specifically, the system 1 comprises a reading apparatus 31 for each automatic dispenser 3 included in the system 1.

Said reading apparatus 31 is operatively connected to the automatic dispenser 3.

The reading apparatus 31 is configured for acquiring the encrypted code C, which the user can display to the reading apparatus 31 by means of a paper-based support or by means of the screen of a smartphone or tablet.

Preferably, the code C is sent to the automatic dispenser 3 which analyses it, if it is equipped with computational capacity to perform this analysis, or it sends it to the server 2, which carries out the analysis and returns to the automatic dispenser a result of this analysis.

Preferably, the dispenser is able to automatically recognise the C code.

According to an embodiment, the C code is a QR code.

Consequently, according to this embodiment, the reading apparatus 31 is a suitable optical QR code reader.

According to another embodiment, the C code is a bar code.

Consequently, in that embodiment, the reading apparatus 31 is a suitable optical bar code reader.

In one embodiment, illustrated by way of example in Figure 2, the reading apparatus 31 is associated, preferably constrained, with the outer case 3C of the automatic dispenser 3.

In one embodiment, comprising a reserved zone Z, illustrated by way of example in Figure 3, the reading apparatus 31 is associated, preferably constrained, with an external wall of the reserved zone Z.

Said reserved zone Z is controlled to open at least as a function of the outcome of the analysis performed on the code C acquired by the reading apparatus 31.

More specifically, the entrance Zin is controlled to open, preferably by the automatic dispenser 3, as a function of the outcome of the analysis performed on the code C acquired by the reading apparatus 31. As described above, said analysis is preferably performed by the automatic dispenser 3 itself but may be performed by the server 2, which subsequently returns a result signal to the automatic dispenser 3.

According to another aspect of the invention, the system 1 comprises a portal 4.

Said portal 4 is housed, according to techniques generally known as layers, on the server 2, which makes it available on the Internet for a display.

More specifically, the portal 4 is in communication with the data storage structure 21, where the information necessary for the consultation of the device is saved.

The system 1 also comprises a device D for displaying said portal 4.

Said device D is advantageously connected to the Internet and, more specifically, is operatively connected to the communication module 22 of the server 2 for an exchange of data.

The portal 4 is configured for displaying, using the device D, the products available in the automatic dispenser 3.

The products available in the automatic dispenser can have been communicated to the server 2 by the automatic dispenser 3 and stored in the storage structure 21 and/or may have been updated by the server 2.

The portal 4 is configured for displaying, through the device D, information regarding a localisation of the automatic dispenser 3 where the products P are available, typically by means of an address containing the street and the town in which the automatic dispenser 3 is located.

Preferably, the device D comprises a screen for displaying the portal 4 comprising the products P available inside the automatic dispenser 3.

Again preferably, the device D comprises a web browser for displaying on a screen of the portal 4.

In use, the device D receives from the server 2 the information necessary for displaying the portal 4 stored in the storage structure 21.

The portal 4 can therefore display in real time, using said device D, the products P available in the automatic dispenser 3 and which, therefore, can be dispensed by it.

The portal 4 is also configured to interact with a user, who, by viewing the products P available in the automatic dispenser 3, may decide to make an order O for purchasing at least one product P.

Preferably, the device D comprises interaction means, through which a user can select at least one product P from among those available in the automatic dispenser 3 and which can be viewed on the portal 4 to perform the order O.

In an example, the interaction means comprise a keyboard and a mouse.

In another example, the interaction means comprise the same screen on which the products P available in the automatic dispenser 3 are displayed during the presentation step, if said screen is also a digitalizing device, commonly known as a touchscreen.

The portal 4 is configured to send a signal representing said order O to the communication module 22 of the server 2, which then sends to the automatic dispenser 3 the booking signal R for the products P present in the order O.

Having received said signal representing the order O, the server 2 generates an encrypted code C uniquely representing said order O.

As described in more detail below, the code C constitutes in practice a code for picking up the corresponding product P.

According to an embodiment, the server 2 is configured to send, using said communication module 22, said encrypted code C to an e-mail address and/or a telephone number.

The e-mail address on which the code C is sent is preferably sent with the order O.

The e-mail, sent by the server 2 and containing the code C, may be displayed on the device D.

The e-mail address may be the address of the same user who has made the order O or that of a different person, preferably specified in the order O, to whom, for example, the user decides to send a gift in an anonymous manner.

According to another embodiment, the server 2 is configured to make available for a download the code C on the portal 4, so that it is available for a download on the device D.

Once the download is performed, said code C may then be stored on the internal memory of the device D or it may be shared, for example by means of messaging applications.

Preferably, the server 2 is configured to send by e-mail or to make available for a download localisation information of the automatic dispenser 3 in which the product P ordered by means of the order O is present and booked, that is, of the dispenser selected by the user for purchasing the product.

Preferably, the server 2 is configured to send the encrypted code C to the distributor R which will define, in practice, for the distributor, a code for authenticating the order O.

The system 1 is preferably configured to generate and send the booking signal once it has received a payment for the order O.

The system 1 in use in the operations for dispensing products P is described below.

The automatic dispenser 3 first sends an information signal to the connection module 22 of the server 2 of the products P available inside the automatic dispenser 3.

For example, the server signals to the distributor that it will receive products P and the distributor, once it has received the products P, preferably supplied by a system manager, will send receipt confirmation to the server.

Preferably, the dispenser is configured to inform the server following a command from the above-mentioned system manager.

Preferably, said products P have been inserted in a respective anonymous wrapper S, for example a box, which does not allow the contents of the anonymous wrapper S to be seen from the outside, that is to say, it makes it impossible to distinguish which product P is contained therein.

The server 2 stores the information contained in said information signal of the products P available on the storage structure 21.

Through the device D, a user requests access to the portal 4, preferably using a web browser installed on the device D.

The server 2, by means of the communication module 22, sends to said device D the information necessary, stored in the storage structure 21, for displaying the portal 4.

Through the portal 4, the customer also views a localisation of the automatic dispenser 3 or automatic dispensers which have the desired product available, that is, not already purchased by another user.

Through the portal 4, the customer selects one or more products P present and available in an automatic dispenser 3 of the system 1 and makes an order O for purchasing these products P.

Through the device D, the portal 4 sends to the communication module 22 of the server 2 a signal representing the order O, preferably after receiving a payment for that order O.

Based on the signal representing that order O, the server 2 sends, by means of the communication module 22, to the automatic dispenser 3 a booking signal R for the products P present in said order O.

Advantageously, through the booking signal R, the products P present in said order O will be reserved for the user who has made the order O and will not be available for purchase by another user.

At the same time, the server 2 updates the data relating to the availability of products P in the automatic dispenser 3 on the storage structure 21.

The server 2 generates, after receiving the order O, an encrypted code C code which uniquely identifies the order O.

If the automatic dispenser 3 is provided with analysis capacity, that is to say, if it comprises a control unit designed for comparing encrypted codes, the server 2 sends, through the communication module 22, the code C generated to the automatic dispenser 3.

The code C is sent by e-mail to an e-mail address, preferably indicated by the user in the order O, or it is made available on the portal 4 for a download on the device D.

At the same time as sending or downloading the code C, the customer receives information regarding the localisation of the automatic dispenser 3 in which the product P ordered by means of order O is present and reserved.

After receiving the code C, by means of an e-mail or download, the recipient may print the code C on a paper-based medium or keep code C stored on the internal memory to display it on a screen of, for example, a smartphone or tablet.

It should be noted that all the operations described above do not involve the presence of the user performing the order O close to the automatic dispenser 3.

Subsequently, by moving close to the automatic dispenser 3 or the entrance Z in the reserved zone Z, the user presents his/her pickup code, that is, the code C, on paper-based support or by means of a smartphone or tablet, to the reading apparatus 31.

The reading apparatus 31 acquires the code C and sends a signal to the automatic dispenser 3 which, preferably, checks the pickup code of the customer with the authentication codes received from the server and, if they match, dispenses the respective product.

In general, the reading apparatus 31 acquires the code C and sends a signal to the automatic dispenser 3 which, if equipped with an analysis capacity, analyses in-situ the code C acquired on site or, alternatively, sends the code C acquired to the server 2 which analyses it.

Depending on who performs this analysis, the automatic dispenser 3 or the server 2 emits a signal indicating the result of the analysis.

More specifically, during the analysis, the code C acquired by the reading apparatus 31 is compared with the codes C emitted by the server 2 in response to the orders O received.

If the code C acquired does not correspond to any C code emitted for the automatic dispenser 3 to which the reading apparatus 31 is connected, a negative result signal will be emitted and no product P will be dispensed.

If the code C acquired corresponds to a code C emitted for the automatic dispenser 3 to which the reading apparatus 31 is connected, a positive result signal will be emitted.

If there is a reserved zone Z, the automatic dispenser 3, preferably using the reading apparatus 31 positioned outside the reserved zone Z, controls the opening of the entrance Zin such a way that the user can complete the picking up of the product in complete privacy, away from prying eyes.

The automatic dispenser 3 dispenses the at least one product P relative to the order O for which the code C has been acquired and releases the door 3S so that the user can pick up said at least one product P.

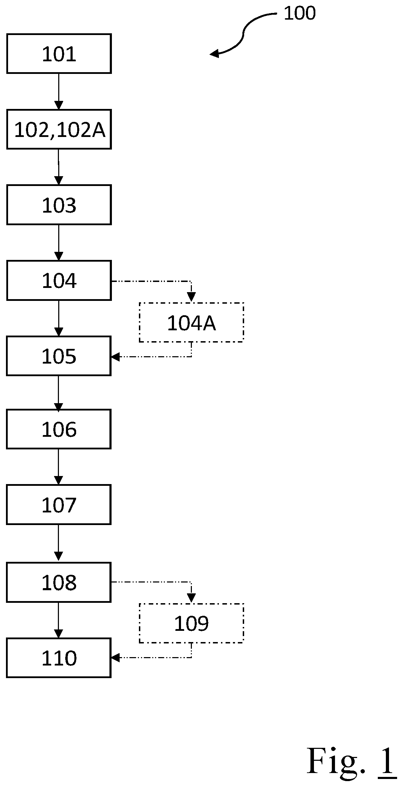

With reference to Figure 1, the numeral 100 denotes an automatic distribution method, hereinafter referred to for simplicity as the method 100.

The method 100 comprises a step 101 of preparing a system 1 preferably of the type described above.

Said preparing step 101 comprises preparing the server 2, the automatic dispenser 3, the reading apparatus 31 and the portal 4.

The method 100 comprises a setting up step 102.

The setting up step 102 comprises the setting up of at least one product P inside said automatic dispenser 3.

Preferably, the method 100 comprises a boxing step 102A.

Again preferably, the boxing step 102A is performed simultaneously with the step 102 for setting up at least one product P inside said automatic dispenser 3.

The boxing step 102A comprises the boxing in an anonymous wrapper S of the at least one product P to be inserted inside said automatic dispenser 3.

More specifically, in the boxing step 102A each product P is inserted in a respective anonymous wrapper S, for example a box, which does not allow the contents of the anonymous wrapper S to be seen from the outside, that is to say, it makes it impossible to distinguish which product P is contained therein.

In that way, the method 100 distributes a product P inside said anonymous wrapper S which makes it impossible to recognise from the outside of the anonymous wrapper S which product P is contained therein.

The method 100 then comprises a presentation step 103.

The presentation step 103 comprises a presentation in real time on said portal 4 of the at least one product P inserted and available in the automatic dispenser 3 during the setting up step 102.

By means of the device D, it is possible to display the portal 4 and to consult the products P available at that moment in the automatic dispenser 3.

Preferably, the portal 4 is configured for displaying information regarding a localisation of the automatic dispenser 3 where the products P are available, typically by means of an address containing the street and the town in which the automatic dispenser 3 is located.

Preferably, the method 100 comprises a signalling step.

The signalling step comprises signalling to the server 2 the products P available inside the automatic dispenser 3. Preferably, the signalling step is performed by the automatic dispenser 3,

For example, during the signalling step, the automatic dispenser 3 sends to the server 2 a signal representing the products P available at that moment in the automatic dispenser 3.

In alternative embodiments, the signalling step occurs in another way on the availability of products P in the distributors, for example by the system manager or automatically based on the orders received.

Said signalling step is required for the step 103 of presenting on the portal 4 the at least one product P set up or inserted and available in the automatic dispenser 3 at least in an initial step of the method.

Preferably, the method 100 comprises an updating step.

The updating step comprises updating on the portal 4 the products P available inside the automatic dispenser 3 indicated in the signalling step.

Preferably, the updating step is performed by the server 2; according to embodiments, the updating step may be performed by the dispensers 3.

More specifically, during the updating step, the server 2 loads on said portal 4 information representing the products P available in the automatic dispenser 3 signalled in the signalling step and information relating to the localisation of the automatic dispenser 3. Advantageously, the updating step makes it possible to display, during the presentation step 103, almost in real time, the availability of the products P inside the automatic dispenser 3, using the portal 4 displayed on the device D.

If there are several distributors connected to the portal 4, the updating step makes it possible to display, during the presentation step 103, almost in real time, in which dispenser(s) is available the product P, by means of the portal 4 displayed on the device D.

Like the signalling step, the updating step is also required for the presentation step 103 on the portal 4 of the at least one product P set up or inserted and available in the automatic dispenser 3.

In that way, in fact, if a product P is no longer available in the automatic dispenser 3, for example because it is purchased by a user of the system 1, said product P would no longer be displayed on the portal 4 for a purchase.

The method 100 comprises, subsequently, a receiving step 104.

The receiving step 104 comprises receiving, through said portal 4, an order O for purchasing at least one product P.

More specifically, the order O represents a desire to purchase a product P from among those available in the automatic dispenser 3 and which can be displayed on the portal 4.

An information signal of the order O is sent by the portal 4 to the server 2.

Preferably, the method 100 comprises a step of receiving a payment 104A of said order O.

According to an embodiment, the step of receiving a payment 104A is executed after the step 104 for receiving an order O.

According to an embodiment, the step of receiving a payment 104A is executed simultaneously with the step 104 for receiving an order O.

According to yet another embodiment, the step of receiving a payment 104A is executed before the step 104 for receiving an order O, for example by purchasing a purchase coupon which can be used to execute an order O.

The step of receiving a payment 104A comprises sending by said portal 4, using the device D, an information signal of the payment details, for example a credit card or a PayPal^{®} account, relating to the order.

Advantageously, the execution of the step of receiving a payment 104A allows the user to withdraw in the future the at least one product P relative to the order O without having to take cash or a credit card.

The method 100 comprises a booking step 105.

The booking step 105 comprises a booking of at least one product P purchased with the order O in the receiving step 104, in particular after receiving the payment 104A.

Preferably, the booking step is performed by the automatic dispenser 3 and/or by the server.

In other words, once the product P is selected, ordered and paid for by the user, it is booked and can no longer be purchased by other users.

Preferably, during the booking step 105, the server 2 sends to the automatic dispenser 3 a signal R for booking the at least one product P purchased with the order O in the receiving step 104.

The system 1, for example by means of the automatic dispenser 3 and/or the server, in response to the control signal, withdraws from the availability the at least one product P purchased so that the product P cannot be purchased in the future by another user.

At the same time, by performing the updating step, the server 2 updates the portal 4 in such a way that the at least one product P purchased so that the product P cannot be purchased in the future by another user.

Advantageously, thanks to the execution of the booking step 105, the user who made the order O received during the receiving step 104 is sure that the product will remain reserved in said automatic dispenser 3 until withdrawal is performed.

Again advantageously, from the moment of execution of the booking step 105, which follows the receiving step 104 by a very limited length of time (i.e. less than one minute), the user who has made the order O can, after reaching the place where the automatic dispenser is located, withdraw the ordered product P.

In this way, the time taken to satisfy a need of the user, who with other distribution methods must generally wait for delivery times, which may even be several days, is considerably reduced.

Subsequently, the method 100 comprises a step 106 of sending an encrypted code C, for example of the type described above.

The code C represents the purchase order O received in the receiving step 104.

More specifically, during the sending step 106, the code C is sent, preferably by the server 2, to a recipient.

In an example, the recipient may be the same user who has executed the order O received during the receiving step 104.

In another example, the recipient may be a person other than the user who made the order O, who has provided contact information through the order O, for example an e-mail address or telephone number.

Preferably, the sending step 106 comprises sending said encrypted code C by e-mail.

The e-mail address on which the code C is sent during the sending step 105 is, preferably, provided with the order O received in the receiving step 104.

As mentioned above, said e-mail address may be the address of the user who made the order O or that of a different person, to whom, for example, the user decides to send a gift in an anonymous manner.

Again preferably, the sending step 106 comprises a download of said code C on the device D on which said portal 4 is displayed or on a device of the recipient.

Once the download is performed, said code C may then be stored on the internal memory of the device D or it may be shared, for example by means of messaging applications.

Preferably, the step 106 of sending the order O also comprises sending information regarding the address of the automatic dispenser 3 in which the ordered product P is available.

The method 100 then comprises a step 107 of reading said code C.

The reading step 107 is performed using the reading apparatus 31 of the automatic dispenser 3, which is configured for reading the code C.

More specifically, the user who intends to withdraw the product P goes close to the automatic dispenser 3, in particular to the address indicated in the sending step 106, and presents the code C to the reading apparatus 31 performing the reading step 107.

More specifically, the user can display the code C to the reading apparatus 31 by means of a paper-based support or by means of the screen of a smartphone or tablet.

The method 100 then comprises a step 108 of analysing said code C.

The purpose of the analysis step 108 is to check for the actual presence inside the automatic dispenser 3 of the at least one product P contained in order O represented by the code C presented to the reading apparatus 31 during the reading step 107.

The analysis step 108 may be performed by the automatic dispenser 3, using a suitable control unit, if the server 2 sends to the automatic dispenser 3 the codes C representing the orders O relating to the products P contained therein.

Alternatively, the analysing step 108 comprises sending, by the automatic dispenser 3, the code C acquired from the reading apparatus 31 to the server 2, which analyses the code C and compares it with those emitted in relation to the orders O received and sends an information signal to the automatic dispenser 3 of the result of the analysis.

If the code C read in the reading step 107 corresponds to a code C emitted in the sending step 106, then the analysing step 108 returns a positive result.

On the other hand, if the code C read in reading step 107 does not correspond to any code C emitted in the sending step 106, then the analysing step 108 returns a negative result and the method 100 is interrupted.

If the analysing step 108 has given a positive result, the method comprises a dispensing step 110.

The dispensing step 110 comprises dispensing the at least one product P in the order O shown in the code C analysed in the analysing step 108.

Preferably, during the dispensing step 110, the automatic dispenser 3 controls the opening of the door 3S by means of a suitable control unit and thus allows a user access to the withdrawal area to withdraw the product P dispensed.

Preferably, before the dispensing step 110, the method 100 comprises a step 109 of opening a reserved zone Z.

In this embodiment, the reading step 107 is performed by the reading apparatus 31 present outside the reserved zone Z which is operatively connected to the automatic dispenser 3.

The entrance Zin is opened, during the opening step 109, as a function of the result of the analysis of the code C.

Advantageously, the performance of the opening step 109 of the reserved zone Z guarantees privacy to the user during the pickup operations, since access to the reserved zone Z makes the performance of the dispensing step 110 invisible to external observers.

Advantageously, the system 1 described above makes it possible to guarantee to the user an immediate satisfaction of the need since, by means of the portal 4, the products inside the automatic dispenser 3 are displayed in real time, that is to say, the products P which the user could withdraw in a moment immediately after the emission of the order O and the relative code C, without having to wait for the time needed for a specific delivery.

Moreover, the system 1 allows the privacy of the user to be guaranteed because it is not possible to extrapolate information from the code C on the contents in the order O without a special reading apparatus 31 and the presence of an anonymous wrapper S makes it impossible for third parties to recognise the product P withdrawn.

## Claims

1. An automatic distribution method (100) comprising the steps of:
- preparing or inserting (102) at least one product (P) inside an automatic dispenser (3) making it available for purchase;
- presentation (103) on a portal (4) of the at least one product (P) prepared or inserted and available inside the automatic dispenser (3);
- receiving (104), through said portal (4), of a purchase order (O) for purchasing said product (P) available;
- booking (105), of the product (P) purchased with said purchase order (O);
- sending (106) an encrypted code (C) to a recipient, preferably a QR code, representing said purchase order (O);
- reading (107) said code (C) using a reading apparatus (31);
- analysing (108) said code (C);
- dispensing (110), if the analysing step (107) has given a positive result, of said product (P) available in the dispenser and included in the purchase order (O) represented in the code (C).

2. The automatic distribution method according to claim 1, comprising a step of receiving a payment (104A) of said purchase order (O).

3. The automatic distribution method according to claim 1 or 2, wherein the sending step (106) comprises sending by e-mail said encrypted code (C).

4. The automatic distribution method according to any one of the preceding claims, wherein the sending step (106) comprises a downloading of said code (C), preferably on a device (D), on which said portal (4) is displayed.

5. The automatic distribution method according to any one of the preceding claims, comprising, if the analysing step (108) has given a positive result, an opening step (109) of opening a reserved zone (Z) where to perform the dispensing step (110).

6. The automatic distribution method according to any one of the preceding claims, comprising a boxing step (102A) for boxing in an anonymous package (S) the at least one product (P) to be inserted inside said automatic dispenser (3).

7. The automatic distribution method according to any one of the preceding claims, comprising a signalling step to the server (2), by means of the automatic dispenser (3), of the products (P) available inside the automatic dispenser (3).

8. The automatic distribution method according to any one of the preceding claims, comprising an updating step on said portal (4), by means of the server (2), of the products (P) available inside the automatic dispenser (3) following the booking step.

9. The automatic distribution method according to any one of the preceding claims, comprising a preparing step (101) of preparing a server (2), an automatic dispenser (3), an apparatus (31) for reading an encrypted code (C) and a portal (4) which can be viewed using a device (D), said automatic dispenser (3), said reading apparatus and said portal (4) being operatively connected to the server (2), said portal (4) being displayable on the device (D) from a remote position relative to the automatic dispenser (3).

10. An automatic distribution system (1) comprising:
- a remote server (2) comprising a data storage structure (21) and a communication module (22) operatively connected to each other;
- at least one automatic dispenser (3), operatively connected to the communication module (22) of the server (2), configured for containing and dispensing at least one product (P);
- at least one reading apparatus (31) of an encrypted code (C), operatively connected to the at least one automatic dispenser (3), configured for acquiring said code (C);
- a portal (4), hosted on said server (2) and in communication with the data storage structure (21);
- a device (D) for displaying said portal (4), operatively connected to the communication module (22) of the server (2);
said system (1) being **characterised in that** on said portal (4) can be viewed in real time, through said device (D), at least one product (P) available contained in said automatic dispenser (3) and dispensable by the automatic dispenser (3).

11. The system (1) according to the preceding claim, wherein the automatic dispenser (3) comprises an opaque outer case (3C), that is to say, whose inside cannot be inspected from the outside.

12. The system (1) according to claim 10 or 11, wherein the reading apparatus (31) is an apparatus for reading a QR code.

13. The system (1) according to any one of claims 10 to 12, wherein the at least one automatic device (3) comprises a reserved zone (Z) whose opening is controlled at least as a function of an outcome of an analysis of the code (C) acquired by the reading apparatus (31).

14. The system (1) according to any one of claims 10 to 13, comprising a plurality of automatic dispensers (3) and a plurality of reading apparatuses (31), one for each automatic dispenser (3) of said plurality of automatic dispensers (3).
